# EUROPEAN PATENT APPLICATION

(11) **EP 4 703 884 A1**
(43) Date of publication of application: **04.03.2026**
(21) Application number: 25196726.1
(22) Date of filing: 19.08.2025
(51) Int. Cl.: G06F 9/54, G06F 1/3209, G06F 3/0484, G06F 11/30

(54) **CENTRALIZED CONTROL OF BASEBOARD MANAGEMENT CONTROLLERS FOR A FLEET OF HARDWARE DEVICES**

(30) Priority: 27.08.2024 US 202418816869
(71) Applicant: Microsoft Technology Licensing, LLC, Redmond, WA 98052 (US)
(72) Inventor: SAROIU, Stefan, Redmond, Washington, 98052 (US); MEHROTRA, Sanjeev, Redmond, Washington, 98052 (US)
(74) Representative: CMS Cameron McKenna Nabarro Olswang LLP

(57) **Abstract**

Disclosed herein is a system for implementing centralized control of a fleet of hardware devices (e.g., network servers) via baseboard management controllers (BMCs) configured on printed circuit boards of the hardware devices in the fleet. The system enables a user (e.g., a fleet "admin") to efficiently view information for the different types of BMCs configured across the fleet of hardware devices, identify a set of BMCs in the fleet that is associated with a shared characteristic, and implement a control action across the set of BMCs that is associated with the shared characteristic. Consequently, one of the technical benefits of the disclosed subject matter relates to efficient and effective scaling of BMC-related control actions across a set of hardware devices that respectively correspond to the set of BMCs that is associated with the shared characteristic.

## Description

### BACKGROUND

Hardware devices such as network servers are configured with processing components (e.g., central processing units (CPUs), graphical processing units (GPUs)), storage components, networking components, accelerator components, and/or other hardware components. An example of a hardware device includes a network server, a rack, a GPU, and so forth. A hardware device can be part of a distributed computing environment, and thus, the hardware device can be configured in a cloud datacenter, an edge computing site, or an on-premises site.

A Baseboard Management Controller (BMC) is a discrete module that is capable of monitoring the physical states of the aforementioned components using sensors and/or other mechanisms, as well as managing the physical states. The BMC is typically configured on a printed circuit board of a hardware device (e.g., a Universal Baseboard, a Motherboard) and can implement communications associated with the monitoring and/or controlling of the physical states of the aforementioned components via a shared or a dedicated network interface card (NIC). The BMC is neither controlled nor can be manipulated by an operating system of the hardware device. Similarly, the BMC is not made aware of the functions being performed by the hardware device. Rather, the BMC is tasked with ensuring that the hardware device can effectively perform the functions via the monitoring and controlling of the physical states of the aforementioned components. To enable this, the BMC is configured for remote user access and/or control.

Unfortunately, a user (e.g., an administrator or "admin") that is authorized to access the BMC and/or implement control actions with respect to the BMC (e.g., power cycle the hardware device) can only access and control one BMC at a time. This can be a time consuming process if the administrator is tasked with managing a fleet of hardware devices operated by an entity (e.g., a company, an agency, an organization, an institution).

### SUMMARY

The system described herein provides effective, centralized control of a fleet of hardware devices via baseboard management controllers (BMCs) configured on printed circuit boards of the hardware devices in the fleet. The hardware devices in the fleet are configured and deployed in a distributed computing environment (e.g., a datacenter, an edge computing site, an on-premises site) by, or for, an entity that in many cases is a tenant of a cloud platform (e.g., AMAZON WEB SERVICES, GOOGLE CLOUD PLATFORM, MICROSOFT AZURE).

The hardware devices in the fleet are often different types of hardware devices that have BMCs produced by different manufacturers (e.g., HEWLETT PACKARD, DELL, SUPERMICRO). An individual BMC manufacturer may provide its own proprietary interface and software to access and control a BMC. However, the proprietary interface is limited to a specific type of BMC and only displays information related to a single BMC configured on a single hardware device. To illustrate, a user (e.g., an administrator or "admin") tasked with managing a fleet of hardware devices would be required to access and view a first proprietary interface to control a first BMC of one type. The user would then be required to access and view a second proprietary interface to control a second BMC of a different type. These access, viewing, and control operations must then be repeated for each hardware device in the fleet.

The system described herein generates and/or communicates a portal interface that enables centralized control of different types of BMCs configured across a fleet of hardware devices (e.g., hundreds or thousands of hardware devices). More specifically, the system enables a user (e.g., a fleet "admin") to efficiently view information for the different types of BMCs configured across the fleet of hardware devices, identify a set of BMCs in the fleet that is associated with a shared characteristic, and implement a control action across the set of BMCs that is associated with the shared characteristic. Consequently, one of the technical benefits of the disclosed subject matter relates to efficient and effective scaling of BMC-related control actions across a set of hardware devices that respectively correspond to the set of BMCs that is associated with the shared characteristic. In various examples, the fleet of hardware devices belongs to a tenant of a cloud platform.

The system is configured to receive, from a BMC of each hardware device in the fleet, telemetry data associated with the BMC's corresponding hardware device. As described above, the hardware devices in the fleet include different types of BMCs manufactured by different manufacturers. The system then provides, via a portal interface, the telemetry data received for each hardware device in the fleet to a user for viewing purposes. For example, the portal interface displays an identification for each hardware device in the fleet, a type of BMC configured on the hardware device, and monitored values for a plurality of telemetry metrics included in the telemetry data.

In addition to displaying the telemetry data, the portal interface includes a plurality of user interface elements that respectively represent a plurality of characteristics for the BMCs. The system receives, via the portal interface, a first input that selects a user interface element from the plurality of user interface elements. The system then identifies, based on the first input, a set of BMCs that shares a respective characteristic represented by the user interface element selected. This identification operation may be referred to herein as a filtering operation to produce a filtered set of BMCs. The portal interface graphically distinguishes the filtered set of BMCs that shares the characteristic from other BMCs that do not share the characteristic so the user can efficiently view the BMCs and/or hardware devices that are candidates for a control action. In one example, the portal interface can list all the BMCs and/or hardware devices and graphically distinguish the filtered set of BMCs from the other BMCs that do not share the characteristic (e.g., via shading, colors, text attributes such as size, font, underline, bold). In another example, the portal interface can remove the other BMCs that do not share the characteristic from being displayed so that only the filtered set of BMCs are displayed in a list format.

In one example, the characteristic shared by the BMCs in the identified set comprises a specific type of BMC. In another example, the characteristic shared by the BMCs in the identified set comprises a geographic location, as the hardware devices can be geographically located in a datacenter, a near edge computing site, a far edge computing site, an on-premises site, etc. In yet another example, the characteristic shared by the BMCs in the identified set comprises a telemetry value that fails to satisfy a telemetry threshold value established for a telemetry metric. The telemetry metric can be temperature, power consumption, or a performance metric such as processor throughput (e.g., the number of processes or instructions completed per unit of time), network throughput (e.g., number of bits communicated per second), latency, the number of storage errors, the number of processing errors, processing capacity/load, storage capacity/load, networking capacity/load, etc. Other telemetry metrics are also contemplated in the context of this disclosure. The telemetry threshold value can be a default value, a user-defined value, or a value determined by machine learning and/or artificial intelligence.

Accordingly, via the portal interface described herein, the user can efficiently view a filtered set of BMCs and/or hardware devices that has the same type of BMC, that is located in the same geographic location, and/or that has telemetry values that fail to satisfy a telemetry threshold value established for a telemetry metric. In one example, a telemetry value fails to satisfy the telemetry threshold value if the telemetry value is greater than the telemetry threshold value. In another example, a telemetry value fails to satisfy the telemetry threshold value if the telemetry value is less than the telemetry threshold value.

Now that the user has identified and/or is viewing the filtered set of BMCs via the portal interface, the system is configured to receive a second input that selects a control action to implement via the filtered set of BMCs. After receiving the second input, the system causes the control action to be implemented via the set of BMCs.

In one example, the control action relates to power management for the set of hardware devices corresponding to the filtered set of BMCs. For instance, via the control privileges afforded to the BMCs, the user can power off hardware devices that are located in the same geographic location (e.g., if one or more temperature values indicate a cooling mechanism at the location has failed). Moreover, via the control privileges afforded to the BMCs, the user can power up and/or power off hardware devices to accommodate load patterns, peak use, non-peak use, etc., as deduced from one or more performance values.

In another example, the control action relates to thermal control for the set of servers corresponding to the filtered set of BMCs. For instance, via the control privileges afforded to the BMCs, the user can move workloads from overheated networks servers to cooler hardware devices. Moreover, the user can use different communication channels to turn on fans to increase the cooling of hardware devices at a particular geographic location.

In yet another example, the control action relates to predictive maintenance for the set of servers corresponding to the filtered set of BMCs. For instance, via the control privileges afforded to the BMCs, the user can predict hardware failures based on the telemetry values that fail to satisfy telemetry threshold values. The user can then optimize a maintenance schedule for a technician to service and/or replace components before the predicted hardware failures occur.

In an additional example, the control action comprises pushing a firmware update or security patch to the set of hardware devices corresponding to the filtered set of BMCs. This control action is implemented when the shared characteristic is a type of BMC.

This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 illustrates an example environment in which a system implements centralized control of a fleet of network servers via baseboard management controllers (BMCs) configured on printed circuit boards of the network servers in the fleet.
FIG. 2 illustrates an example graphical user interface that enables centralized control of the fleet of network servers via the BMCs.
FIG. 3A illustrates the example graphical user interface of FIG. 2 where user inputs filter the BMCs based on type to implement a firmware update.
FIG. 3B illustrates the example graphical user interface of FIG. 2 where user inputs filter the BMCs based on geographic location to implement a power management control action.
FIG. 3C illustrates the example graphical user interface of FIG. 2 where user inputs filter the BMCs based on power values relative to a power value threshold to implement a power management control action.
FIG. 3D illustrates the example graphical user interface of FIG. 2 where user inputs filter the BMCs based on temperature values relative to a temperature value threshold to implement a thermal control action.
FIG. 3E illustrates the example graphical user interface of FIG. 2 where user inputs filter the BMCs based on performance values relative to a performance value threshold to implement a predictive maintenance control action.
FIG. 4 illustrates an example flow diagram of an example method for implementing centralized control of a fleet of hardware devices via baseboard management controllers (BMCs) configured on printed circuit boards of the hardware devices in the fleet.
FIG. 5 is an example computing system in accordance with the present disclosure.

### DETAILED DESCRIPTION

The following Detailed Description discloses techniques and technologies for implementing centralized control of a fleet of hardware devices via baseboard management controllers (BMCs) configured on printed circuit boards of the hardware devices in the fleet. The hardware devices in the fleet are configured and deployed in a distributed computing environment (e.g., a datacenter, an edge computing site, an on-premises site) by, or for, an entity that in many cases is a tenant of a cloud platform (e.g., AMAZON WEB SERVICES, GOOGLE CLOUD PLATFORM, MICROSOFT AZURE). The BMCs include different types of BMCs produced by different manufacturers (e.g., HEWLETT PACKARD, DELL, SUPERMICRO).

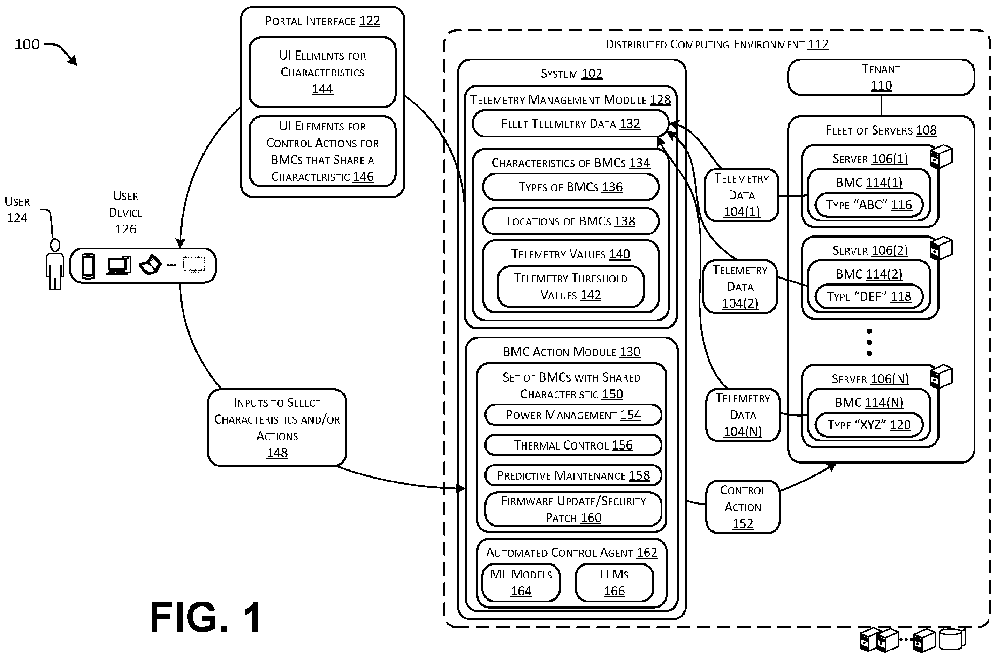

The system described herein enables a user (e.g., a fleet "admin") to efficiently view information for the different types of BMCs configured across the fleet of hardware devices, identify a set of BMCs in the fleet that is associated with a shared characteristic, and implement a control action across the set of BMCs that is associated with the shared characteristic. Consequently, one of the technical benefits of the disclosed subject matter relates to efficient and effective scaling of BMC-related control actions across a set of hardware devices that respectively correspond to the set of BMCs that is associated with the shared characteristic. Various examples, scenarios, and aspects are described below with reference to FIGS. 1-5.

FIG. 1 illustrates an example environment 100 in which a system 102 receives respective telemetry data 104(1-N) from network servers 106(1-N) that comprise a fleet of network servers 108. While FIGS. 1-3E discussed herein use a network server as an example of a hardware device, it is understood in the context of this document that the techniques can additionally or alternatively be implemented with respect to other types of hardware devices (e.g., a rack, a GPU). In various examples, the fleet of network servers 108 belongs to a tenant 110 of a cloud platform in which the system 102 is configured. As described above, the cloud platform comprises at least part of a distributed computing environment 112 (e.g., a datacenter, an edge computing site, an on-premises site). Moreover, the cloud platform is tasked with managing the operations implemented by the tenant 110 within the distributed computing environment 112.

The network servers 106(1-N) in the fleet 108 are often different types of network servers that have respective BMCs 114(1-N) produced by different manufacturers. As shown, BMC 114(1) is of type "ABC" 116, while BMC 114(2) is of type "DEF"118 and BMC 114(N) is of type "XYZ" 120. While the network servers 106(1-N) are each shown with different types of BMCs, it is understood that some (but not all) of the network servers 106(1-N) in the fleet may have a same type of BMC. Moreover, two network servers may share a BMC.

As mentioned above, an individual BMC manufacturer may provide its own proprietary interface and software to access and control a BMC. However, the proprietary interface is limited to a specific type of BMC and only displays information related to a single BMC configured on a single network server. To illustrate, a user (e.g., an administrator or "admin") tasked with managing a fleet of network servers would be required to access and view a first proprietary interface to control a first BMC of one type. The user would then be required to access and view a second proprietary interface to control a second BMC of a different type. These access, viewing, and control operations must then be repeated for each network server in the fleet.

The system 102 described herein generates and/or communicates a portal interface 122 that enables centralized control of different types of BMCs 116-120 configured across a fleet of network servers 108 (e.g., hundreds or thousands of network servers).

As more specifically described herein, the system 102 enables a user 124 (e.g., a fleet "admin"), via the use of a user device 126 (e.g., a smartphone, a desktop computer, a laptop computer, a tablet computer) to efficiently view information for the different types of BMCs 116-120 configured across the fleet of network servers 108, identify a set of BMCs in the fleet 108 that is associated with a shared characteristic, and implement a control action across the set of BMCs that is associated with the shared characteristic. In various examples, the portal interface 122 can be accessed and/or communicated via a Representational State Transfer (REST) application programming interface (API). Consequently, one of the technical benefits of the disclosed subject matter relates to efficient and effective scaling of BMC-related control actions across a set of network servers that respectively correspond to the set of BMCs that is associated with the shared characteristic.

As shown, the system 102 includes a telemetry management module 128 and a BMC action module 130. The number of modules illustrated in FIG. 1 is just an example, and the number can vary. That is, functionality described herein in association with the illustrated modules can be performed by a fewer number of modules or a larger number of modules on one device (e.g., server) in the system 102 or spread across multiple devices in the system 102.

The telemetry management module 128 receives the telemetry data 104(1-N) from the respective BMCs 114(1-N) configured on the network servers 106(1-N). The collective telemetry data 104(1-N) is referred to as fleet telemetry data 132 in FIG. 1. The telemetry management module 128 is further configured to track and store characteristics of the BMCs 134.

The characteristics of the BMCs 134 include the types of BMCs 136 (e.g., BMC types 116-120). Moreover, the characteristics of the BMCs 134 include geographic locations 138 of the BMCs, as the network servers 106(1-N) in the fleet 108 can be geographically located in a datacenter, a near edge computing site, a far edge computing site, an on-premises site, etc. The characteristics of the BMCs 134 further include telemetry values 140 (in the fleet telemetry data 132) and telemetry threshold values 142 established for a telemetry metric. More specifically, the characteristics of the BMCs 134 include determinations of whether the telemetry values 140 satisfy the telemetry threshold values 142. The telemetry metric can be temperature, power consumption, or a performance metric such as processor throughput (e.g., the number of processes or instructions completed per unit of time), network throughput (e.g., number of bits communicated per second), latency, the number of storage errors, the number of processing errors, processing capacity/load, storage capacity/load, networking capacity/load, etc. Other telemetry metrics are also contemplated in the context of this disclosure. The telemetry threshold values 142 can be default values, user-defined values, or values determined by machine learning and/or artificial intelligence.

The telemetry management module 128 provides, via the portal interface 122, the telemetry data 104(1-N) (collectively referred to as the fleet telemetry data 132) to the user device 126 for viewing purposes. The telemetry management module 128 can provide the portal interface 122 to the user device 126 upon receiving a request for the fleet telemetry data 132 from the user 124 (e.g., via a REST API). As described in the graphical user interface examples below, the portal interface 122 can display an identification for each network server 106(1-N) in the fleet 108, a type of BMC 116-120 configured on the network servers 106(1-N), and monitored values for a plurality of telemetry metrics included in the fleet telemetry data 132. In additional examples, the portal interface 122 may be able to display non-BMC telemetry data (e.g., telemetry data received directly from workloads running on a network server which is not available via the BMC).

In addition to displaying the fleet telemetry data 132, the portal interface 122 includes user interface elements 144 that respectively represent the characteristics of the BMCs 134. Moreover, the portal interface 122 includes user interface elements 146 to implement different control actions via a filtered set of BMCs that shares a characteristic.

The BMC action module 130 is configured to receive, via the portal interface 122, inputs 148 that select characteristics 134 and/or control actions via the user interface elements 144, 146. For example, the user 126 can provide a first input 148 that selects a user interface element 144 representing a particular characteristic 134. The BMC action module 130 identifies, based on the first input 148, a set of BMCs 150 that shares the characteristic 134 represented by the user interface element 144 selected. This identification operation may be referred to herein as a filtering operation to produce a "filtered" set of BMCs 150.

In one example, the characteristic 134 shared by the BMCs in the identified set 150 comprises a specific type of BMC 136. In another example, the characteristic 134 shared by the BMCs in the identified set 150 comprises a geographic location 138. In yet another example, the characteristic 134 shared by the BMCs in the identified set 150 comprises a telemetry value 140 that fails to satisfy a telemetry threshold value 142 established for a telemetry metric. In one example, a telemetry value 140 fails to satisfy the telemetry threshold value 142 if the telemetry value 140 is greater than the telemetry threshold value 142. In another example, a telemetry value 140 fails to satisfy the telemetry threshold value 142 if the telemetry value 140 is less than the telemetry threshold value 142.

Accordingly, via the portal interface 122 described herein, the user 124 can efficiently view a filtered set of BMCs 150 and/or network servers that has the same type of BMC, that is located in the same geographic location, and/or that has telemetry values that fail to satisfy a telemetry threshold value established for a telemetry metric. Now that the user 124 has identified and/or is viewing the filtered set of BMCs 150 via the portal interface, the BMC action module 130 is configured to receive a second input 148 that selects a user interface element 146 corresponding to a control action 152 to implement via the filtered set of BMCs 150. After receiving the second input 148, the BMC action module 130 causes the control action 152 to be implemented via the set of BMCs 150.

In one example, the control action 152 relates to power management 154 for the set of network servers corresponding to the filtered set of BMCs 150. For instance, via the control privileges afforded to the BMCs, the user 124 can power off network servers that are located in the same geographic location (e.g., if one or more temperature values indicate a cooling mechanism at the location has failed). Moreover, via the control privileges afforded to the BMCs, the user 124 can power up and/or power off network servers to accommodate load patterns, peak use, non-peak use, etc., as deduced from one or more performance values.

In another example, the control action 152 relates to thermal control 156 for the set of servers corresponding to the filtered set of BMCs 150. For instance, via the control privileges afforded to the BMCs, the user 124 can move workloads from overheated networks servers to cooler network servers. Moreover, the user 124 can use different communication channels to turn on fans to increase the cooling of network servers at a particular geographic location.

In yet another example, the control action 152 relates to predictive maintenance 158 for the set of servers corresponding to the filtered set of BMCs 150. For instance, via the control privileges afforded to the BMCs, the user 124 can predict hardware failures based on the telemetry values 140 that fail to satisfy telemetry threshold values 142. The user 124 can then optimize a maintenance schedule for a technician to service and/or replace components before the predicted hardware failures occur.

In an additional example, the control action 152 comprises pushing a firmware update or security patch 160 to the set of network servers corresponding to the filtered set of BMCs 150. This control action is implemented when the shared characteristic is a type of BMC.

In various examples, the BMC action module 130 includes an automated control agent 162. The automated control agent 162 can use machine learning and/or artificial intelligence to automatically perform the control action 152 independent of any user inputs via the portal interface 122.

For example, the automated control agent 162 relies on machine learning models 164 and/or large language models (LLMs) 166 to interpret the telemetry data 104(1-N) received from the BMCs 114(1-N), identify anomalies, and decide to issue alerts or implement the control action 152. The interpretation of the telemetry data 104(1-N) can be based on correlations with the geographical location of the hardware devices and other characteristics that are obtained out-of-band. For instance, these other characteristics can include a jurisdiction governing a geographic location of a hardware device and BMC combination, a quality of the power network connected to the hardware device and BMC combination, etc. Moreover, the decision to implement the control action 152 can be based on the severity of the anomaly and/or the alert. In a more specific example, if the automated control agent 162 detects that the hardware devices in a particular datacenter are overheating, the automated control agent 162 can assess the particular datacenter's cooling system and service logs. If the cooling system is operating at 75% capacity instead of 100%, the automated control agent 162 may decide to shut down 25% of the hardware devices in datacenter X to match the cooling system's reduced capacity.

In additional examples, the automated control agent 162 is configured to access the fleet telemetry data 132 as well as the characteristics of the BMCs 134 to automatically power off network servers that are located in the same geographic location (e.g., if one or more temperature values indicate a cooling mechanism at the location has failed), to automatically power up and/or power off network servers to accommodate load patterns, peak use, non-peak use, etc., as deduced from one or more performance values, to automatically move workloads from overheated networks servers to cooler network servers, to automatically predict hardware failures based on the telemetry values 140 that fail to satisfy telemetry threshold values 142, and/or to automatically push a firmware update or security patch 160 to the set of network servers corresponding to the filtered set of BMCs 150. Thus, another technical benefit of the techniques described herein is the automatic and intelligent management of BMCs.

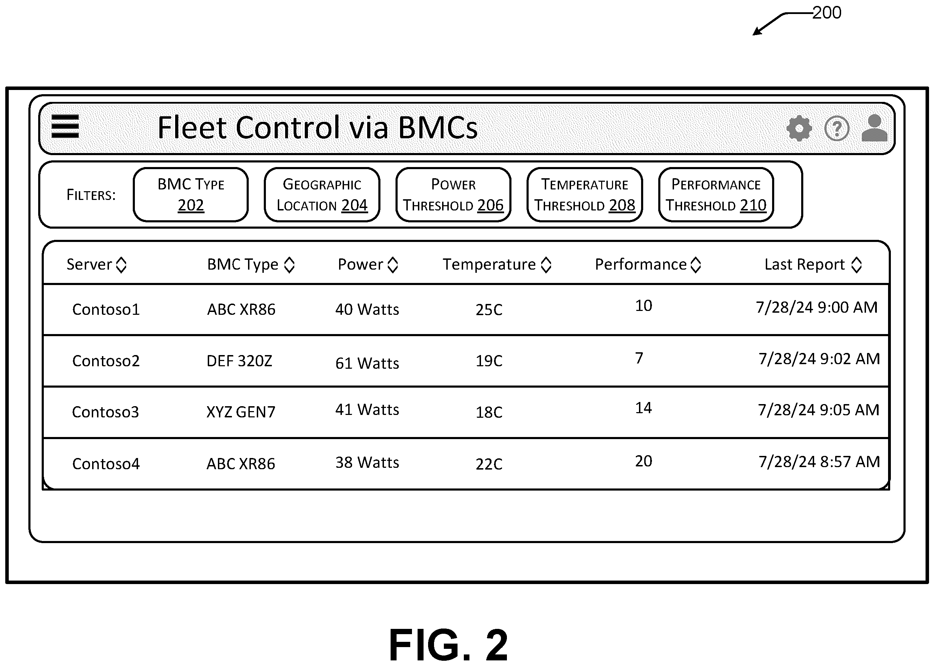

FIG. 2 illustrates an example graphical user interface 200 that enables centralized control of the fleet of network servers via the BMCs. The graphical user interface 200 corresponds to the portal interface 122. As mentioned above, the portal interface 122 can display information related to the network servers 106(1-N) in the fleet 108 and the different types of BMCs 116-120 configured thereon. For ease of discussion, four network servers and BMCs are illustrated. However, it is understood, in the context of this disclosure, that information related to more (or less) than four network servers and BMCs can be displayed via the portal interface 122.

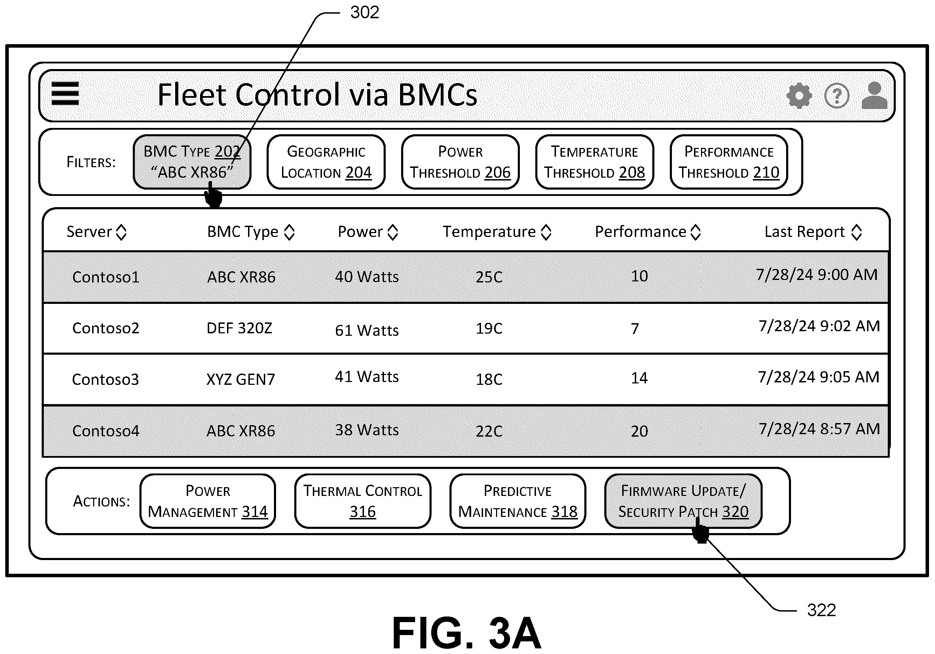

As shown, the portal interface 122 can include an identification (e.g., a name) for each network server 106(1-N) in the fleet 108 (e.g., "Contoso1", "Contoso2", "Contoso3", "Contoso4"), a type of BMC configured on the network servers 106(1-N) (e.g., "ABC XR86", "DEF 320Z", "XYZ GEN7", "ABC XR86"), and monitored values for one or more telemetry metrics included in the fleet telemetry data 132. More specifically, the example of the portal interface 122 shows respective values for "Power" (e.g., "40 Watts", "61 Watts", "41 Watts", "38 Watts"), "Temperature" (e.g., "25C", "19C", "18C", "22C"), and "Performance" (e.g., "10", "7", "14", "20"). As described above, an example performance telemetry metric can reflect processor throughput (e.g., the number of processes or instructions completed per unit of time), network throughput (e.g., number of bits communicated per second), latency, the number of storage errors, the number of processing errors, processing capacity/load, storage capacity/load, or networking capacity/load. Other telemetry performance metrics are also contemplated in the context of this disclosure. While one generic performance telemetry metric is shown in the examples of FIG. 2 and FIGS. 3A-3E, it is understood in the context of this disclosure that multiple performance telemetry metrics can be displayed simultaneously via the portal interface 122. Additionally, other information related to the network servers 106(1-N) in the fleet 108 and the different types of BMCs 116-120 configured thereon, such as the last time the telemetry data 104(1-N) was collected or received from each of the network servers 106(1-N) in the fleet 108. The portal interface 122 can further includes user interface elements to implement scrolling and/or sorting based on the displayed features.

The portal interface 122 further includes user interface elements 144 that respectively represent the characteristics of the BMCs 134. The user interface elements 144 are configured to perform a filtering operation that identifies BMCs that share a characteristic 134. More specifically, user interface element 202 represents BMC type and, upon a user selection 302 specifying BMC type "ABC XR86" as shown in FIG. 3A, user interface element 202 is configured to identify a set of BMCs 150 that shares the characteristic based on the BMC type "ABC XR86". Based on the user selection 302, the portal interface 122 graphically distinguishes the filtered set of BMCs of type "ABC XR86" (e.g., configured on network servers "Contoso1" and "Contoso4") from other BMCs that have different types (e.g., configured on network servers "Contoso2" and "Contoso3"). In this way, the user 124 can efficiently view the BMCs and/or network servers that are candidates for a control action 152 based on BMC type 136.

In the examples of FIGS. 3A-3E illustrated herein, the portal interface 122 graphically distinguishes the filtered set of BMCs 150 from the other BMCs via shading. However, the graphical distinction can be implemented via other features such as colors, text attributes (e.g., size, font, underline, bold), and so forth. In another example, the portal interface 122 can graphically distinguish the filtered set of BMCs 150 from the other BMCs by removing the other BMCs that do not share the characteristic from being displayed so that only the filtered set of BMCs 150 are displayed in a listed format.

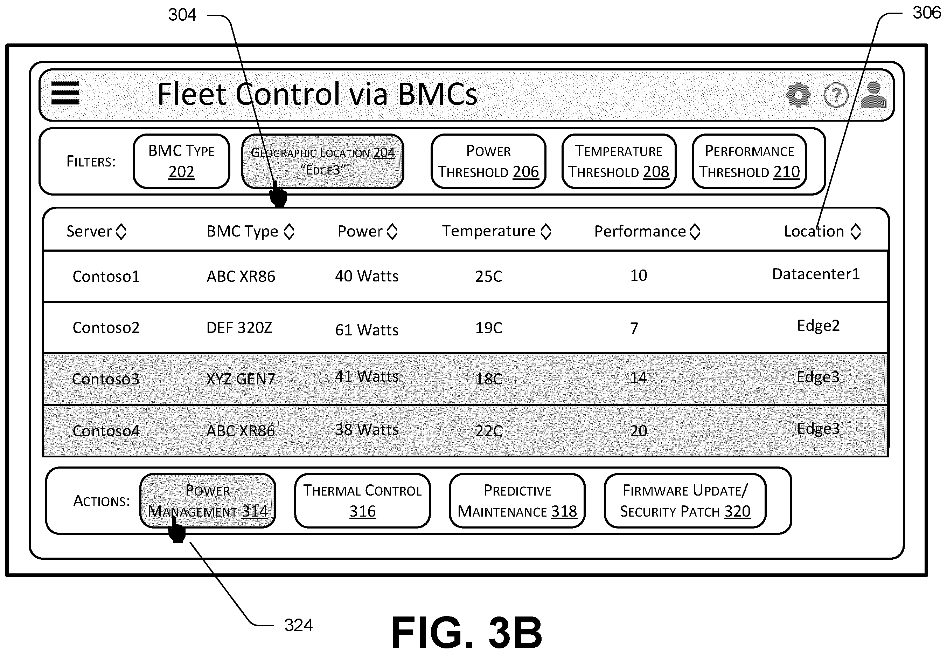

Returning to FIG. 2, user interface element 204 represents geographic location and, upon a user selection 304 specifying geographic location "Edge3" as shown in FIG. 3B, user interface element 204 is configured to identify a set of BMCs 150 that shares the characteristic based on the geographic location "Edge3". Based on the user selection 304, the portal interface 122 displays location information 306 and graphically distinguishes the filtered set of BMCs at geographic location "Edge3" (e.g., network servers "Contoso3" and "Contoso4") from other BMCs that have different geographic locations (e.g., network servers "Contoso1" and "Contoso2"). In this way, the user 124 can efficiently view the BMCs and/or network servers that are candidates for a control action 152 based on geographic location 138.

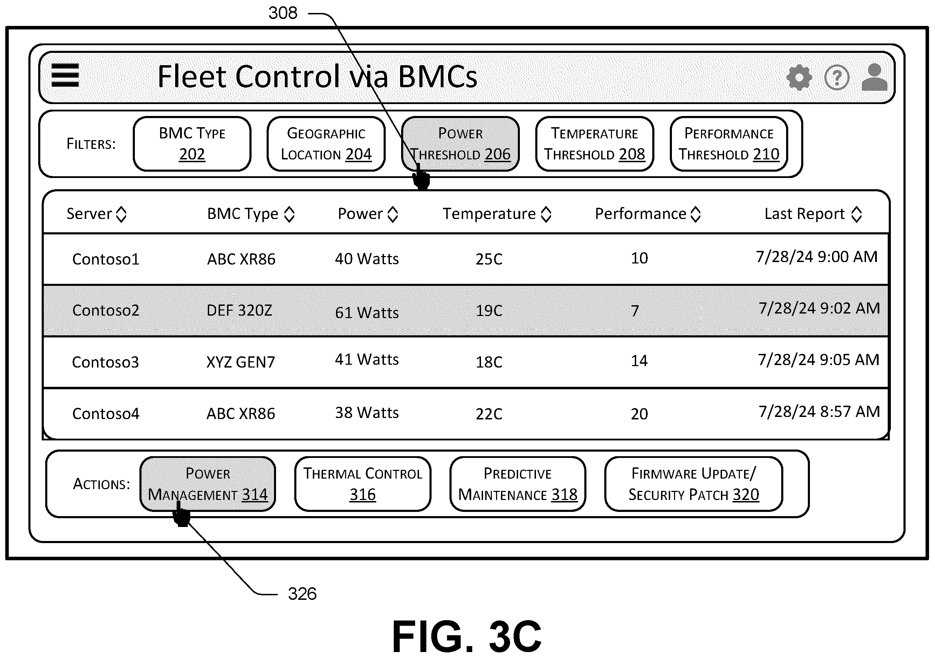

Returning to FIG. 2, user interface element 206 represents a power threshold and, upon a user selection 308 as shown in FIG. 3C, user interface element 206 is configured to identify a set of BMCs 150 that shares the characteristic based on a power value satisfying a power threshold value (e.g., greater than "50 Watts"). Based on the user selection 308, the portal interface 122 graphically distinguishes the filtered set of BMCs that have power consumption that is greater than "50 Watts" (e.g., network server "Contoso2") from other BMCs that have power consumption that is less than "50 Watts" (e.g., network servers "Contoso1", "Contoso3" and "Contoso4"). In this way, the user 124 can efficiently view the BMCs and/or network servers that are candidates for a control action 152 based on power consumption.

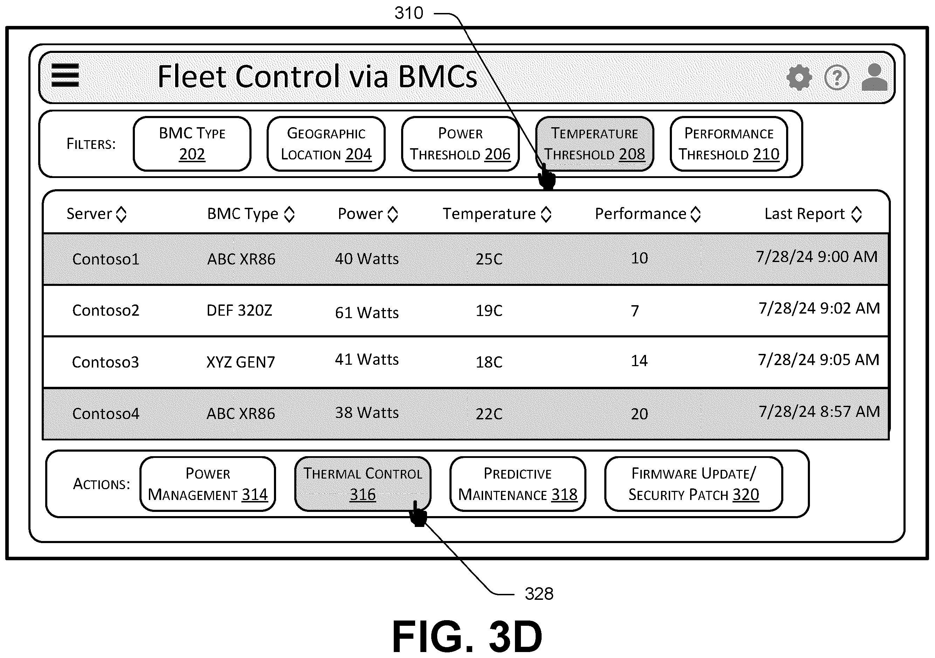

Returning to FIG. 2, user interface element 208 represents a temperature threshold and, upon a user selection 310 as shown in FIG. 3D, user interface element 208 is configured to identify a set of BMCs 150 that shares the characteristic based on a temperature value satisfying a temperature threshold value (e.g., greater than "20C"). Based on the user selection 310, the portal interface 122 graphically distinguishes the filtered set of BMCs that have a temperature value that is greater than "20C" (e.g., network servers "Contoso1" and "Contoso4") from other BMCs that have a temperature value that is less than "20C" (e.g., network servers "Contoso2" and "Contoso3"). In this way, the user 124 can efficiently view the BMCs and/or network servers that are candidates for a control action 152 based on temperature.

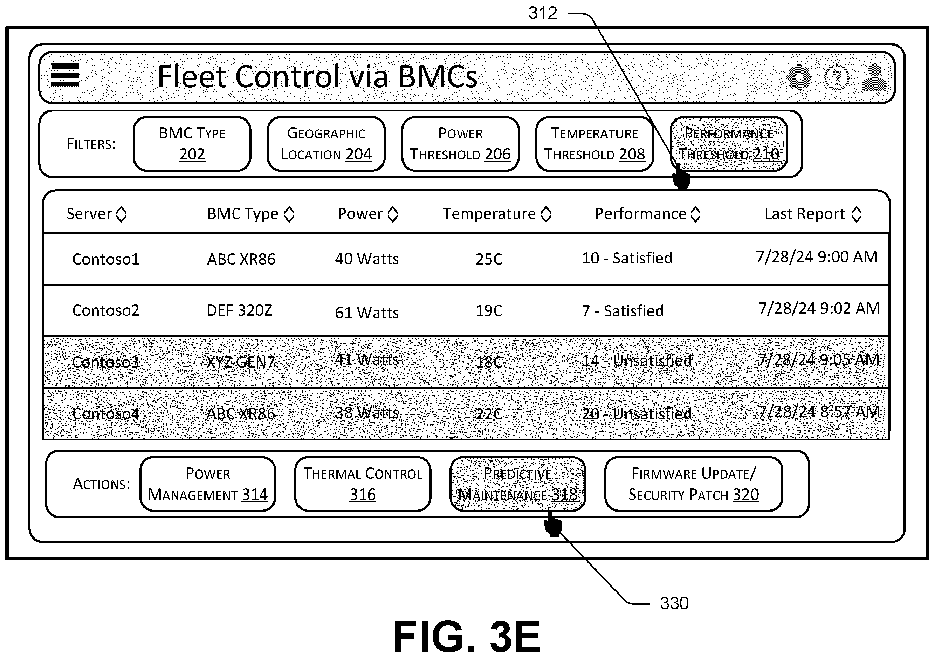

Returning to FIG. 2, user interface element 210 represents a performance threshold and, upon a user selection 312 as shown in FIG. 3E, user interface element 210 is configured to identify a set of BMCs 150 that shares the characteristic based on a performance value satisfying a performance threshold value (e.g., greater than "12" errors for a defined time period). Based on the user selection 312, the portal interface 122 graphically distinguishes the filtered set of BMCs that have a performance value that is greater than "12" (e.g., network servers "Contoso3" and "Contoso4") from other BMCs that have a performance value that is less than "12" (e.g., network servers "Contoso1" and "Contoso2"). In this way, the user 124 can efficiently view the BMCs and/or network servers that are candidates for a control action 152 based on performance.

Now that the filtering operation and identification of a set of BMCs 150 that shares a characteristic has been described, the discussion returns to FIG. 3A where the portal interface 122 displays user interface elements 146 that are selectable by the user 124 to implement different control actions 152 via a filtered set of BMCs 150 that shares a characteristic. More specifically, the user interface elements include a user interface element 314 representing a power management control action, a user interface element 316 that represents a thermal control action, a user interface element 318 that represents predictive maintenance, and a user interface element 320 that represents a firmware update or security patch.

In the context of FIG. 3A, the set of BMCs 150 shares a type of BMC and a user selection 322 of user interface element 320 pushes a firmware update control action or security patch control action to the set of BMCs 150 that shares a type of BMC. In the context of FIG. 3B, the set of BMCs 150 shares a geographic location and a user selection 324 of user interface element 314 implements a power management control action on the set of BMCs 150 that shares a geographic location (e.g., power on or power off the set of network servers corresponding to the set of BMCs 150). In the context of FIG. 3C, the set of BMCs 150 shares power values that satisfy a power value threshold and a user selection 326 of user interface element 314 implements a power management control action on the set of BMCs 150 that shares power values that satisfy the power value threshold (e.g., power off the set of network servers corresponding to the set of BMCs 150). In the context of FIG. 3D, the set of BMCs 150 shares temperature values that satisfy a temperature value threshold and a user selection 328 of user interface element 316 implements a thermal control action on the set of BMCs 150 that shares temperature values that satisfy the temperature value threshold (e.g., move workloads from the set of network servers corresponding to the set of BMCs 150 to cooler network servers). Finally, in the context of FIG. 3E, the set of BMCs 150 shares performance values that fail to satisfy a performance value threshold and a user selection 330 of user interface element 318 implements a predictive maintenance control action on the set of BMCs 150 that shares performance values that fail to satisfy the performance value threshold (e.g., the user 124 can optimize a maintenance schedule for a technician to service and/or replace components before the predicted hardware failures occur).

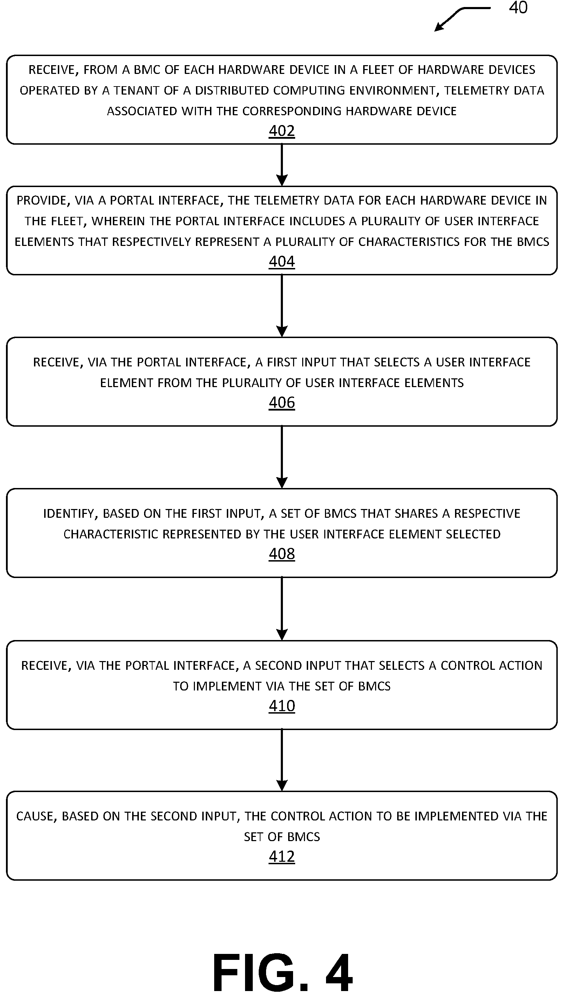

FIG. 4 represents an example method implemented in accordance with various examples from the description of FIGS. 1-3E. The order in which the operations are described is not intended to be construed as a limitation, and any number of the described operations can be combined in any order and/or in parallel to implement the process. Moreover, the operations in FIG. 4 can be implemented in hardware, software, and/or a combination thereof. In the context of software, the operations represent computer-executable instructions that, when executed by one or more processing units, cause the one or more processing units to perform the recited operations. For example, modules and other components described herein can be stored in a computer-readable storage media and executed by at least one processing unit to perform the described operations.

FIG. 4 illustrates a flow diagram of an example method 400 for implementing centralized control of a fleet of hardware devices via baseboard management controllers (BMCs) configured on printed circuit boards of the hardware devices in the fleet.

At operation 402, they system receives, from a baseboard management controller of each hardware device in a fleet of hardware devices operated by a tenant of a distributed computing environment, telemetry data associated with the corresponding hardware device. As described above, the fleet of hardware devices includes different types of baseboard management controllers manufactured by different manufacturers.

At operation 404, the system provides, via a portal interface, the telemetry data for each hardware device in the fleet of hardware devices. As described above, the portal interface includes a plurality of user interface elements that respectively represent a plurality of characteristics for the baseboard management controllers.

At operation 406, the system receives, via the portal interface, a first input that selects a user interface element from the plurality of user interface elements.

At operation 408, the system identifies, based on the first input, a set of baseboard management controllers that shares a respective characteristic represented by the user interface element selected.

At operation 410, the system receives, via the portal interface, a second input that selects a control action to implement via the set of baseboard management controllers.

At operation 412, the system causes, based on the second input, the control action to be implemented via the set of baseboard management controllers.

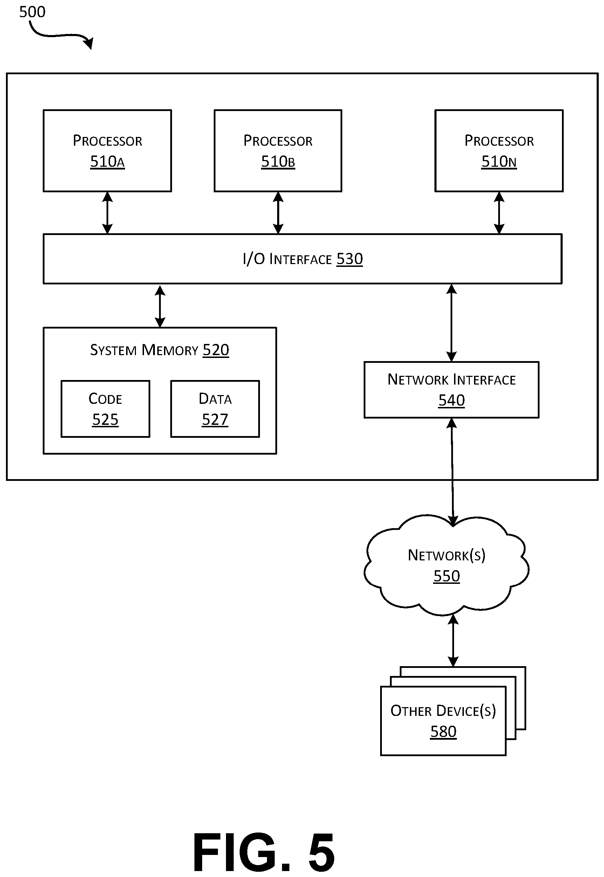

FIG. 5 illustrates a general-purpose computing device 500. In the illustrated embodiment, computing device 500 includes one or more processors 510a, 510b, and/or 510n (which may be referred herein singularly as "a processor 510" or in the plural as "the processors 510") coupled to a system memory 520 via an input/output (I/O) interface 530. Computing device 500 further includes a network interface 540 coupled to I/O interface 530.

In various embodiments, computing device 500 may be a uniprocessor system including one processor 510 or a multiprocessor system including several processors 510 (e.g., two, four, eight, or another suitable number). Processors 510 may be any suitable processors capable of executing instructions. For example, in various embodiments, processors 510 may be general-purpose or embedded processors implementing any of a variety of instruction set architectures (ISAs), such as the x88, PowerPC, SPARC, or MIPS ISAs, or any other suitable ISA. In multiprocessor systems, each of processors 610 may commonly, but not necessarily, implement the same ISA.

System memory 520 may be configured to store instructions and data accessible by processor(s) 510. In various embodiments, system memory 520 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing one or more desired functions, such as those methods, techniques and data described above, are shown stored within system memory 520 as code 525 and data 527.

In one embodiment, I/O interface 530 may be configured to coordinate I/O traffic between the processor 510, system memory 520, and any peripheral devices in the device, including network interface 540 or other peripheral interfaces. In some embodiments, I/O interface 530 may perform any necessary protocol, timing, or other data transformations to convert data signals from one component (e.g., system memory 520) into a format suitable for use by another component (e.g., processor 510). In some embodiments, I/O interface 530 may include support for devices attached through various types of peripheral buses, such as a variant of the Peripheral Component Interconnect (PCI) bus standard or the Universal Serial Bus (USB) standard, for example. In some embodiments, the function of I/O interface 530 may be split into two or more separate components. Also, in some embodiments some or all of the functionality of I/O interface 530, such as an interface to system memory 520, may be incorporated directly into processor 510.

Network interface 540 may be configured to allow data to be exchanged between computing device 500 and other device or devices 580 attached to a network or network(s) 580, such as other computer systems or devices as illustrated in FIG. 1, for example. In various embodiments, network interface 540 may support communication via any suitable wired or wireless general data networks. Additionally, network interface 540 may support communication via telecommunications/telephony networks such as analog voice networks or digital fiber communications networks, via storage area networks such as Fibre Channel SANs or via any other suitable type of network and/or protocol.

In some embodiments, system memory 520 may be one embodiment of a computer-accessible medium configured to store program instructions and data as described above for FIGS. 1-4 for implementing embodiments of the corresponding method and apparatus. However, in other embodiments, program instructions and/or data may be received, sent or stored upon different types of computer-accessible media. A computer-accessible medium may include non-transitory storage media or memory media, such as magnetic or optical media, e.g., disk or DVD/CD coupled to computing device 500 via I/O interface 530. A non-transitory computer-accessible storage medium may also include any volatile or non-volatile media, such as RAM (e.g. SDRAM, DDR SDRAM, RDRAM, SRAM, etc.), ROM, etc., that may be included in some embodiments of computing device 500 as system memory 520 or another type of memory. Further, a computer-accessible medium may include transmission media or signals such as electrical, electromagnetic or digital signals, conveyed via a communication medium such as a network and/or a wireless link, such as may be implemented via network interface 540. Portions or all of multiple computing devices, such as those illustrated in FIG. 5, may be used to implement the described functionality in various embodiments; for example, software components running on a variety of different devices and servers may collaborate to provide the functionality. In some embodiments, portions of the described functionality may be implemented using storage devices, network devices, or special-purpose computer systems, in addition to or instead of being implemented using general-purpose computer systems. The term "computing device," as used herein, refers to at least all these types of devices and is not limited to these types of devices.

Various storage devices and their associated computer-readable media provide non-volatile storage for the computing devices described herein. Computer-readable media as discussed herein may refer to a mass storage device, such as a solid-state drive, a hard disk or CD-ROM drive. However, it should be appreciated by those skilled in the art that computer-readable media can be any available computer storage media that can be accessed by a computing device.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computing devices discussed herein. For purposes of the claims, the phrase "computer storage medium," "computer-readable storage medium" and variations thereof, does not include waves, signals, and/or other transitory and/or intangible communication media, per se.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope of the present description, with the foregoing examples provided only to facilitate this discussion.

In light of the above, it should be appreciated that many types of physical transformations take place in the disclosed computing devices in order to store and execute the software components and/or functionality presented herein. It is also contemplated that the disclosed computing devices may not include all of the illustrated components shown in FIG. 5, may include other components that are not explicitly shown in FIG. 5, or may utilize an architecture completely different than that shown in FIG. 5.

The disclosure presented herein also encompasses the subject matter set forth in the following clauses.

Example Clause A, a method for implementing centralized control via telemetry data received from different types of baseboard management controllers, manufactured by different manufacturers, that are configured on printed circuit boards for a fleet of hardware devices operated by a tenant of a distributed computing environment, the method comprising: receiving, from a baseboard management controller of each hardware device in the fleet of hardware devices, the telemetry data associated with the corresponding hardware device; providing, via a portal interface, the telemetry data for each hardware device in the fleet of hardware devices, wherein the portal interface includes a plurality of user interface elements that represent a plurality of characteristics for implementing one of a plurality of control actions via a set of baseboard management controllers; receiving, via the portal interface, a first input that selects a user interface element from the plurality of user interface elements; identifying, based on the first input, the set of baseboard management controllers that shares a respective characteristic represented by the user interface element selected; receiving, via the portal interface, a second input that selects a control action, from the plurality of control actions, to implement via the set of baseboard management controllers; and causing, based on the second input, the control action to be implemented via the set of baseboard management controllers, wherein the control action relates to power management for a set of hardware devices within which the set of baseboard management controllers is configured.

Example Clause B, the method of Example Clause A, wherein the portal interface displays an identification for each hardware device in the fleet of hardware devices, a type of baseboard management controller configured on the hardware device, and values for a plurality of telemetry metrics included in the telemetry data.

Example Clause C, the method of Example Clause A or Example Clause B, further comprising graphically distinguishing, within the portal interface, the set of baseboard management controllers from other baseboard management controllers that do not share the respective characteristic represented by the user interface element selected.

Example Clause D, the method of any one of Example Clauses A through C, wherein the respective characteristic shared by the set of baseboard management controllers comprises a specific type of baseboard management controller.

Example Clause E, the method of any one of Example Clauses A through C, wherein the respective characteristic shared by the set of baseboard management controllers comprises a geographic location.

Example Clause F, the method of any one of Example Clauses A through C, wherein the respective characteristic shared by the set of baseboard management controllers comprises a temperature value that fails to satisfy a temperature threshold value.

Example Clause G, the method of any one of Example Clauses A through C, wherein the respective characteristic shared by the set of baseboard management controllers comprises a power consumption value that fails to satisfy a power consumption threshold value.

Example Clause H, the method of any one of Example Clauses A through C, wherein the respective characteristic shared by the set of baseboard management controllers comprises a performance value that fails to satisfy a performance threshold value.

Example Clause I, a system comprising: one or more processers; and computer storage media storing instructions that, when executed by the one or more processors, cause the system to perform operations comprising: receiving, from a baseboard management controller of each hardware device in a fleet of hardware devices operated by a tenant of a distributed computing environment, telemetry data associated with the corresponding hardware device, wherein the fleet of hardware devices includes different types of baseboard management controllers manufactured by different manufacturers; providing, via a portal interface, the telemetry data for each hardware device in the fleet of hardware devices, wherein the portal interface includes a plurality of user interface elements that respectively represent a plurality of characteristics for the baseboard management controllers; receiving, via the portal interface, a first input that selects a user interface element from the plurality of user interface elements; identifying, based on the first input, a set of baseboard management controllers that shares a respective characteristic represented by the user interface element selected; receiving, via the portal interface, a second input that selects a control action to implement via the set of baseboard management controllers; and causing, based on the second input, the control action to be implemented via the set of baseboard management controllers.

Example Clause J, the system of Example Clause I, wherein the portal interface displays an identification for each hardware device in the fleet of hardware devices, a type of baseboard management controller configured on the hardware device, and values for a plurality of telemetry metrics included in the telemetry data.

Example Clause K, the system of Example Clause I or Example Clause J, wherein the operations further comprise graphically distinguishing, within the portal interface, the set of baseboard management controllers from other baseboard management controllers that do not share the respective characteristic represented by the user interface element selected.

Example Clause L, the system of any one of Example Clauses I through K, wherein the respective characteristic shared by the set of baseboard management controllers comprises at least one of a specific type of baseboard management controller, a geographic location, a temperature value that fails to satisfy a temperature threshold value, a power consumption value that fails to satisfy a power consumption threshold value, or a performance value that fails to satisfy a performance threshold value.

Example Clause M, the system of any one of Example Clauses I through L, wherein the control action relates to power management for a set of hardware devices within which the set of baseboard management controllers is configured.

Example Clause N, the system of any one of Example Clauses I through L, wherein the control action relates to thermal control for a set of hardware devices within which the set of baseboard management controllers is configured.

Example Clause O, the system of any one of Example Clauses I through L, wherein the control action relates to predictive maintenance for a set of hardware devices within which the set of baseboard management controllers is configured.

Example Clause P, the system of any one of Example Clauses I through L, wherein the control action comprises a firmware update or security patch for a set of hardware devices within which the set of baseboard management controllers is configured.

Example Clause Q, one or more computer storage media storing instructions that, when executed by one or more processors, cause a system to perform operations comprising: receiving, from a baseboard management controller of each hardware device in a fleet of hardware devices operated by a tenant of a distributed computing environment, telemetry data associated with the corresponding hardware device, wherein the fleet of hardware devices includes different types of baseboard management controllers manufactured by different manufacturers; identifying, via an automated control agent, a set of baseboard management controllers that shares a respective characteristic; and causing, via the automated control agent, a control action to be implemented via the set of baseboard management controllers.

Example Clause R, the one or more computer storage media of Example Clause Q, wherein the respective characteristic shared by the set of baseboard management controllers comprises at least one of a specific type of baseboard management controller, a geographic location, a temperature value that fails to satisfy a temperature threshold value, a power consumption value that fails to satisfy a power consumption threshold value, or a performance value that fails to satisfy a performance threshold value.

Example Clause S, the one or more computer storage media of Example Clause Q or Example Clause R, wherein: the automated control agent correlates, via the use of a large language model, the respective characteristic shared by the set of baseboard management controllers with out-of-band characteristics to decide to implement the control action; and the control action automatically powers off network servers that are located in a same geographic location, automatically powers up or powers off network servers to accommodate load patterns, automatically moves workloads from overheated networks servers to cooler network servers, automatically predicts hardware failures based on telemetry values that fail to satisfy telemetry threshold values, or automatically pushes a firmware update or security patch.

Example Clause T, the one or more computer storage media of any one of Example Clauses Q through S, wherein the automated control agent relies upon at least one of machine learning models or large language models.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

Disclosed herein is a system for implementing centralized control of a fleet of hardware devices (e.g., network servers) via baseboard management controllers (BMCs) configured on printed circuit boards of the hardware devices in the fleet. The system enables a user (e.g., a fleet "admin") to efficiently view information for the different types of BMCs configured across the fleet of hardware devices, identify a set of BMCs in the fleet that is associated with a shared characteristic, and implement a control action across the set of BMCs that is associated with the shared characteristic. Consequently, one of the technical benefits of the disclosed subject matter relates to efficient and effective scaling of BMC-related control actions across a set of hardware devices that respectively correspond to the set of BMCs that is associated with the shared characteristic.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

It should be appreciated that any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element (e.g., two different BMCs).

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter. All examples are provided for illustrative purposes and is not to be construed as limiting.

## Claims

1. A method for implementing centralized control via telemetry data (104(1-N)) received from different types (116, 118, 120) of baseboard management controllers (114(1-N)), manufactured by different manufacturers, that are configured on printed circuit boards for a fleet of hardware devices (108) operated by a tenant (110) of a distributed computing environment (112), the method comprising:
receiving (402), from a baseboard management controller of each hardware device in the fleet of hardware devices, the telemetry data associated with the corresponding hardware device;
providing (404), via a portal interface (122), the telemetry data for each hardware device in the fleet of hardware devices, wherein the portal interface includes a plurality of user interface elements that represent a plurality of characteristics (144) for implementing one of a plurality of control actions via a set of baseboard management controllers (150);
receiving (406), via the portal interface, a first input (148) that selects a user interface element from the plurality of user interface elements;
identifying (408), based on the first input, the set of baseboard management controllers that shares a respective characteristic represented by the user interface element selected;
receiving (410), via the portal interface, a second input (148) that selects a control action (152), from the plurality of control actions, to implement via the set of baseboard management controllers; and
causing (412), based on the second input, the control action to be implemented via the set of baseboard management controllers, wherein the control action relates to power management (154) for a set of hardware devices within which the set of baseboard management controllers is configured.

2. The method of claim 1, wherein the portal interface displays an identification for each hardware device in the fleet of hardware devices, a type of baseboard management controller configured on the hardware device, and values for a plurality of telemetry metrics included in the telemetry data.

3. The method of claim 1 or claim 2, further comprising graphically distinguishing, within the portal interface, the set of baseboard management controllers from other baseboard management controllers that do not share the respective characteristic represented by the user interface element selected.

4. The method of any one of claims 1 through 3, wherein the respective characteristic shared by the set of baseboard management controllers comprises one or more of:
a specific type of baseboard management controller;
a geographic location;
a temperature value that fails to satisfy a temperature threshold value;
a power consumption value that fails to satisfy a power consumption threshold value; and
a performance value that fails to satisfy a performance threshold value.

5. A system (102) comprising:
one or more processers (510); and
computer storage media (520) storing instructions that, when executed by the one or more processors, cause the system to perform operations comprising:
receiving (402), from a baseboard management controller (114(1-N)) of each hardware device (106(1-N)) in a fleet of hardware devices (108) operated by a tenant (110) of a distributed computing environment (112), telemetry data (104(1-N)) associated with the corresponding hardware device, wherein the fleet of hardware devices includes different types (116, 118, 120) of baseboard management controllers manufactured by different manufacturers;
providing (404), via a portal interface (122), the telemetry data for each hardware device in the fleet of hardware devices, wherein the portal interface includes a plurality of user interface elements (144) that respectively represent a plurality of characteristics for the baseboard management controllers;
receiving (406), via the portal interface, a first input (148) that selects a user interface element from the plurality of user interface elements;
identifying (408), based on the first input, a set of baseboard management controllers (150) that shares a respective characteristic represented by the user interface element selected;
receiving (410), via the portal interface, a second input (148) that selects a control action (152) to implement via the set of baseboard management controllers; and
causing (412), based on the second input, the control action to be implemented via the set of baseboard management controllers.

6. The system of claim 5, wherein the portal interface displays an identification for each hardware device in the fleet of hardware devices, a type of baseboard management controller configured on the hardware device, and values for a plurality of telemetry metrics included in the telemetry data.

7. The system of claim 5 or claim 6, wherein the operations further comprise graphically distinguishing, within the portal interface, the set of baseboard management controllers from other baseboard management controllers that do not share the respective characteristic represented by the user interface element selected.

8. The system of any one of claims 5 through 7, wherein the respective characteristic shared by the set of baseboard management controllers comprises at least one of a specific type of baseboard management controller, a geographic location, a temperature value that fails to satisfy a temperature threshold value, a power consumption value that fails to satisfy a power consumption threshold value, or a performance value that fails to satisfy a performance threshold value.

9. The system of any one of claims 5 through 8, wherein the control action relates to least one of:
power management for a set of hardware devices within which the set of baseboard management controllers is configured; and
thermal control for a set of hardware devices within which the set of baseboard management controllers is configured.

10. The system of any one of claims 5 through 9, wherein the control action relates to predictive maintenance for a set of hardware devices within which the set of baseboard management controllers is configured.

11. The system of any one of claims 5 through 10, wherein the control action comprises a firmware update or security patch for a set of hardware devices within which the set of baseboard management controllers is configured.

12. One or more computer storage media (520) storing instructions that, when executed by one or more processors (510), cause a system (102) to perform operations comprising:
receiving (402), from a baseboard management controller (114(1-N)) of each hardware device (106(1-N)) in a fleet of hardware devices (108) operated by a tenant (110) of a distributed computing environment (112), telemetry data (104(1-N)) associated with the corresponding hardware device, wherein the fleet of hardware devices includes different types (116, 118, 120) of baseboard management controllers manufactured by different manufacturers;
identifying, via an automated control agent (162), a set of baseboard management controllers (150) that shares a respective characteristic; and
causing, via the automated control agent, a control action (152) to be implemented via the set of baseboard management controllers.

13. The one or more computer storage media of claim 12, wherein the respective characteristic shared by the set of baseboard management controllers comprises at least one of a specific type of baseboard management controller, a geographic location, a temperature value that fails to satisfy a temperature threshold value, a power consumption value that fails to satisfy a power consumption threshold value, or a performance value that fails to satisfy a performance threshold value.

14. The one or more computer storage media of claim 12 or claim 13, wherein:
the automated control agent correlates, via the use of a large language model, the respective characteristic shared by the set of baseboard management controllers with out-of-band characteristics to decide to implement the control action; and
the control action automatically powers off network servers that are located in a same geographic location, automatically powers up or powers off network servers to accommodate load patterns, automatically moves workloads from overheated networks servers to cooler network servers, automatically predicts hardware failures based on telemetry values that fail to satisfy telemetry threshold values, or automatically pushes a firmware update or security patch.

15. The one or more computer storage media of any one of claims 12 through 14, wherein the automated control agent relies upon at least one of machine learning models or large language models.
